# EUROPEAN PATENT APPLICATION

(11) **EP 4 621 098 A1**
(43) Date of publication of application: **24.09.2025**
(21) Application number: 24164665.2
(22) Date of filing: 19.03.2024
(51) Int. Cl.: C25B 1/04, C25B 9/75, C25B 9/77, C25B 11/02

(54) **ELECTROLYZER FOR PRODUCING HYDROGEN AND METHOD FOR THE PRODUCTION OF HYDROGEN**

(71) Applicant: Finow Automotive Eberswalde GmbH, 16227 Eberswalde (DE)
(72) Inventor: BECKER, Tim, 16227 Eberswalde (DE); ZORR, Marcus, 16227 Eberswalde (DE)
(74) Representative: Schulz Junghans Patentanwälte PartGmbB

(57) **Abstract**

The present invention is related to an electrolyzer for producing hydrogen and to a method for the production of hydrogen.

The electrolyzer for producing hydrogen (210) comprises a plurality of electrolysis cells (1) arranged in a plurality of planes (2), each having at least one anode (10) and one cathode (11) and a proton exchange membrane (3) between the anode (10) and the cathode (11), the proton exchange membranes (3) forming respective active area regions (30), wherein at least one electrolysis cell (1) has a plurality of active area regions (30) arranged substantially in a plane (2), wherein the electrolyzer comprises at least one tie rod (130) provided between active area regions (30) and extending perpendicular with regard to the planes (2).

## Description

The present invention is related to an electrolyzer for producing hydrogen and to a method for the production of hydrogen.

Hydrogen is an energy carrier that can be used in a variety of ways. However, the production of hydrogen is only possible with increased procedural effort and thus corresponding costs.

Water electrolysis is a method that is particularly suitable for the production of hydrogen. Thereby, the disintegration of water takes place within an electrolyte by supplying a disintegration voltage. In the process of water electrolysis, water reduces to hydrogen at the cathode of the electrolysis cell, and water oxidizes to oxygen at the anode. The electrolyte can be in either liquid or solid form. An electrolyte in solid form is advantageous for use in so-called power-to-hydrogen plants, particularly for utilization of energy from renewable energy sources.

Hydrogen is produced in so-called electrolyzers, whose design is broadly similar to that of the fuel cell, which converts hydrogen into electrical energy.

However, the fuel cell cannot be used in a reversible mode for the generation of hydrogen, due to the differences in the arising electrochemical potentials in the cells of the two systems. While the internal resistances within the fuel cell produce voltages of less than one volt as a result of the reaction of hydrogen and oxygen, electrolysis requires significantly more energy to overcome these very internal resistances than the ideal disintegration voltage theoretically requires for water electrolysis. The differences in the applied voltages cause significant differences in the material selection with respect to the corrosion capacity in both systems.

While the fuel cell is supplied with hydrogen and oxygen and water is discharged as a result of the reaction taking place, the electrolyzer must be supplied with large quantities of process water, which is then decomposed into hydrogen and oxygen.

The essential physical differences in the material behavior between the input gases hydrogen and oxygen of the fuel cell and the inlet medium water of the electrolyzer as well as the reaction products cause a fundamental layout difference of the channel cross sections and flow fields in the reaction chambers of the two systems.

These differences also justify the design and material selection of a fine distribution layer used. While inexpensive graphite materials can be used in fuel cells, the fine distribution layer of the anode of an electrolyzer with solid electrolyte must be manufactured from materials resistant to high voltages, such as e.g. titanium.

Fuel cells with solid electrolytes are limited in their output to a few hundred kilowatt hours. System outputs in the megawatt range are already being targeted for electrolyzers in order to increase the efficiency of the plants and reduce the production costs of hydrogen.

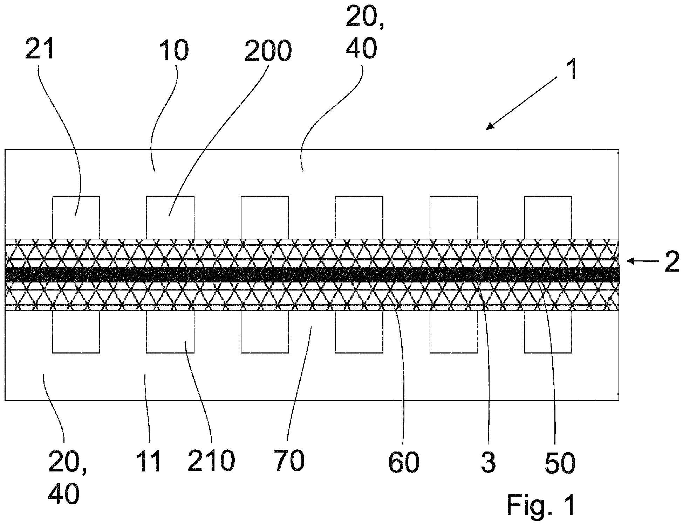

Fig. 1 shows a cross-section of a typical cell set-up of a conventional electrolysis cell 1 with a solid proton exchange membrane 3. The proton exchange membrane 3, which is permeable to hydrogen protons, separates the reaction chambers of the anode 10 and the cathode 11. Anode 10 and cathode 11 each consist of a catalyst layer 50 applied onto the proton exchange membrane 3, which is usually made of a noble metal. This area corresponds to the active area of the electrolysis cell 1. Furthermore, the anode 10 and the cathode 11 of the electrolysis cell 1 each comprise a fine distribution layer 60 of fine-pored elements contacting the catalyst layer 50. In addition, an outer coarse distribution structure 70 is provided with a plate 40, which is also referred to as bipolar plate 20. Water 200 flows through the channels 21 of the bipolar plate 20 on the side of the anode 10 at an input side and a water-oxygen mixture at an output side. Through the channels of the side of the cathode of the bipolar plate 20 flows the gaseous hydrogen 210 and water 200, which penetrated the proton exchange membrane 3.

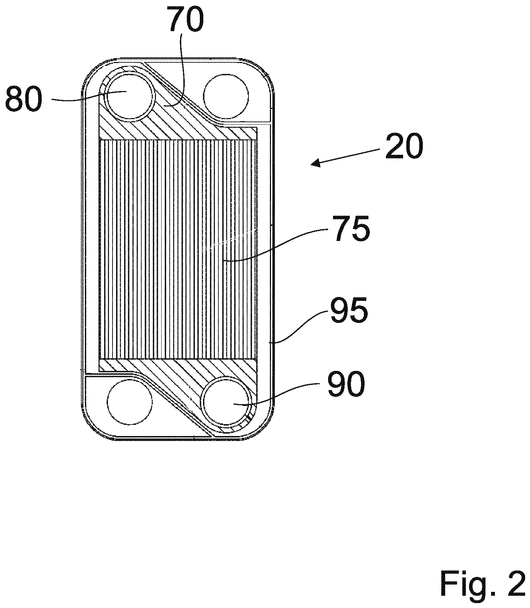

Fig. 2 is a top view of a conventional structure of a bipolar plate 20. The basic shape can be rectangular or circular. A coarse distribution structure 70 connects a flow field 75 for coarse distribution with an inlet device 80 and an outlet device 90 of the flow field 75. The free-cuts for the inlet device 80 and the outlet device 90 of the reaction chamber opposite are also provided in the respective bipolar plate 20. Sealings 95 are provided for sealing the flow field 75 in the reaction chamber.

Inlet devices 80 and the outlet devices 90 form ports by stacking multiple electrolysis cells in the stack. These ports are usually connected externally with tube connections. Furthermore, sealings 95 are located on the bipolar plate 20 to prevent unintentional outflow of the media into areas not intended for this purpose.

The bipolar plates 20 of the electrolysis cells 1 must be impermeable to the liquid and gaseous media within the cell. From the functions and ambient conditions described, the materials and manufacturing methods that can be used for such bipolar plates 20 are derived. In particular, due to the high voltages of usually 1.6V to 2V per cell and the presence of nascent hydrogen, the choice of materials is limited to those characterized by high resistance to corrosion and hydrogen embrittlement. Accordingly, mainly titanium and its alloys as well as stainless steels are used. Furthermore, additional coatings can be used to improve the service life of the elements concerned. Theoretically, a wide range of manufacturing methods are available for the production of such bipolar plates, but their use in practice is limited by the given loads as well as by the costs involved in producing large quantities.

The flow field 75 of a bipolar plate 20 covers at least the active area of the cell and comprises channel land sections. The channel land cross-section geometries can take any shape, taking into account fluid mechanical boundary conditions and production-related process limits. The media are guided within the channels. Electrical contacting to the adjacent fine distribution layer is realized via the webs. In order to achieve a homogeneous distribution of the media as well as a homogeneous distribution of the current density over the active cell area, it is advisable to implement very finely divided channel-land structures. The channel depths and channel widths are usually in the range of tenths of a millimeter. The course of the channels over the flow field 18 can be realized in various course patterns. Such patterns are primarily found in fuel cells with proton exchange membranes, in which hydrogen and oxygen must be brought together on the membrane in precisely defined concentrations. In water electrolysis with a proton exchange membrane, the primary task of the anode-side flow field is to feed the water homogeneously onto the membrane.

The active area is only the area on which the water electrolysis reaction takes place. Usually, this area is equal to the membrane area coated with catalysts and the flow field within the bipolar plate. Non-active area can be seen in individual elements or individual regions of the cell area required for media supply, seals of the electrolysis cell to the environment, and usually to supports in the rim to accommodate the connecting elements of the individual cells in the cell stack. The active area of the cell or its sum of all active areas of the individual cells in the stack has a linear relationship to the system performance of the individual cell or the entire cell stack.

The increase of the current density per cell allows the increase of the cell power. It is directly related to the cell voltage. To increase the current density, the cell voltage must be increased. Since the reaction voltage at which water splitting takes place is constant, increasing the cell power by increasing the cell voltage or the current density also means a decrease in the efficiency of the cell.

Since all materials and the cell structure cause internal electrical resistances, the operating voltage of the cell must be increased to overcome the internal resistances. The additional voltage is the over potential or over voltage.

The increase in cell performance by enlarging the active area, on the other hand, can be achieved with unchanged operating parameters and thus without loss of electrical efficiency.

Based on the electrochemical relationships described above, enlarging the active area is an effective means of increasing the performance and efficiency of water electrolysis with a solid proton exchange membrane, particularly if active areas of up to 10,000 cm² are to be realized.

However, the active areas of conventional systems are far away from this. From a fluid mechanics point of view, however, the significant enlargement of the active area means a significant deterioration of the water supply to the electrolysis cell with an increase in the length of the flow paths of the water through the cell.

Object of the invention is to provide an electrolyzer and a method for the production of hydrogen, with which hydrogen can be produced in a cost-effective and reliable manner.

This object is solved by the electrolyzer according to claim 1 as well as by the method for the production of hydrogen according to claim 12. Advantageous embodiments of the electrolyzer are stated in subclaims 2-11. An advantageous embodiment of the method for producing hydrogen is stated in subclaim 13.

A first aspect of the invention is an electrolyzer for producing hydrogen, comprising a plurality of electrolysis cells arranged in a plurality of planes, each having at least one anode and one cathode and a proton exchange membrane between the anode and the cathode, the proton exchange membranes forming respective active area regions. At least one electrolysis cell has a plurality of active area regions arranged substantially in a plane. The electrolyzer comprises at least one tie rod provided between active area regions, wherein the tie rod extends perpendicular with regard to the planes. The direction of main extension of the tie rod may be essentially perpendicular with regard to the planes.

The plurality of electrolysis cells is arranged in several horizontal planes, relative to a use orientation of the electrolyzer. The electrolysis cells are formed with relatively small thickness relative to length and width and are thus essentially two-dimensional. The tie rod may be attached to a top plate and a bottom plate of the electrolyser to generate compressive forces in the stack and apply compressive force to at least one inner sealing of the stack.

In one embodiment, all electrolysis cells have a plurality of active area regions arranged essentially in a respective plane.

Due to the arrangement of the plurality of active area regions in a plane, the active area regions are positioned quite close to each other.

The active area regions are thereby separated from each other with respect to their functionality of converting water into hydrogen.

The present invention relates to water electrolysis with a solid electrolyte, the so-called proton exchange membrane (PEM), which are primarily based on a perfluorinated sulfonic acid (PFSA) copolymer.

Further, the electrolyzer according to the invention can be used for Anion Exchange Membran Electrolysis (AEM), too.

In an advantageous embodiment, the electrolysis cells are arranged in a stacked configuration.

Here, the membrane permeable to the hydrogen protons separates the reaction chambers of the anode and the cathode. The anode and cathode each comprise a catalyst layer applied to the membrane, in an advantageous embodiment each made of a noble metal or a noble metal alloy. Such a configured region is an active area region of the cell in question.

By enlarging the active area region, a significant increase in the performance of PEM electrolyzers can be achieved. In addition, the efficiency of the cell can be increased by compensating the power losses from over potentials by reducing the cell voltage across the active area region.

The relatively small active area regions reduce the risk of local drying of the membrane, which can lead to a short-circuit reaction and thus destroy the cell.

Furthermore, the power requirement of marginal supply systems such as water pumps is reduced.

Due to the partitioning of the active area region of a cell into several individual segments, the present electrolyzer represents a function-optimized, i. e. flow-optimized, design of an electrolysis stack with a proton exchange membrane.

In one embodiment, at least one of cathode and anode comprises at least one coarse distribution structure for guiding a respective medium in the respective electrode along at least one active area region.

For the anode, the respective medium is water, and for the cathode, the medium is a mixture of gaseous hydrogen and water.

The facing sides of a respective cathode and anode of an electrolysis cell form a so-called bipolar plate in or on which the plurality of active area regions are formed.

This means that water flows in and a water-oxygen mixture flows out through the channels of the bipolar plate on the anode side. Gaseous hydrogen and water, which penetrated the membrane, flow through the channels of the bipolar plate on the cathode side.

Object of the bipolar plate is to provide media-tight separation of the anode and cathode of two adjacent electrolysis cells with simultaneous low-resistance contacting of both cells for current flow.

The coarse distribution structure can be at least partially incorporated directly into the bipolar plate, for example by milling or reforming a metal sheet. However, it can also be applied as a separate element on a flat bipolar plate in the form of expanded metal grids.

Further, at least one of anode and cathode may comprise a plate on its side facing away from the proton exchange membrane, wherein the coarse distribution structure is at least partially formed by channels integrated into the plate and/or by webs attached to the plate.

Alternatively, the coarse distribution structure is formed from an expanded metal grid.

Ib case that both the cathode and the anode of an electrolytic cell form a coarse distribution structure, and in the respective active area regions of the electrodes the coarse distribution structure defines a respective flow direction for the medium, conducted by the respective electrode, wherein the flow directions of the areas of cathode and anode associated with a respective active area region run at an angle of 60° to 120°.

That is, the flow directions of the areas of cathode and anode associated with a respective active area region run essentially at right angles to one another.

In this embodiment, the electrolyzer may be carried out in a way that per electrolytic cell there is at least one inlet device for feeding an inlet medium into the electrolytic cell and at least one outlet device for discharging an outlet medium from the electrolytic cell, wherein the inlet and outlet devices of a plurality of electrolytic cells are fluidically-connected to form a common inlet flow connection and a common outlet flow connection.

The inlet flow connection and outlet flow connection form the so-called ports.

By stacking the electrolysis cells, a common inlet flow connection and a common outlet flow connection are formed respectively. In an advantageous embodiment, it is provided that these common flow ports are arranged on different side surfaces of the stacking arrangement formed by the electrolysis cells arranged in several planes and are fluidically-connected there with lines and/or reservoirs for the corresponding mediums.

In one embodiment, at least one electrolytic cell of the electrolyzer has at least three active area regions arranged essentially in a plane.

For instance, in one embodiment, all electrolysis cells have at least three active area regions arranged essentially in a plane.

Up to 30 active area regions may be present per electrolysis cell.

Accordingly, the electrolyzer can have total active areas of more than 1,000cm², and in the case of up to 30 individual segments or active area regions per electrolysis cell, the total active area can increase to up to 10,000cm².

The the proton exchange membrane may have a fine distribution layer.

That is, the anode and cathode of a respective cell may each comprise as porous transport layer a fine distribution structure of fine-pored elements contacting the catalyst layer.

The active area regions may be are arranged in a supporting element. In this case, the individual active area segments of the bipolar plates may be connected by an outer frame as a supporting element.

Furthermore, the design of the segmented cell arrangement according to the invention allows the use of a further bipolar plate. This further bipolar plate can guide the coolant through the cell for active heat management and active heat recovery. Analogous to the first-mentioned bipolar plate, the coolant flow in the further bipolar plate also passes through inlets and outlets in the frame area.

In addition to the clearances for the inlets and outlets in the frame, the further portions between the individual regions of the frame can have clearances for clamping elements. For optimum contacting of the individual elements, the cell stack should be braced with defined and uniform area pressures via end-face head plates. The position and number of the through holes for the tie rods, which are area-neutral, are advantageous for uniform tensioning of the cell stack in order to realize high tensioning forces.

Sealing of the segmented active area regions to the outer frame of the bipolar plate can be achieved by full area flat gaskets over the entire frame area with appropriate free-cuts at the through openings, or by ring gaskets along seal grooves in the frame.

The active area regions may be embedded in the supporting element.

This outer frame (supporting element) can be presented on the one hand as a separate element with a connection to be formed to the active area region or as a one-piece bipolar plate consisting of flow field segments and outer frame.

In one embodiment, between at least two active area regions arranged adjacent in one plane a receiving space is formed for receiving the medium in the respective electrode.

An advantageous embodiment of the invention is realized by free areas between the individual active area regions which are formed by the segmentation. In the context of stacking the individual cells to form a stack, this results in pressure reservoirs which combine the function of inlet and outlet lines as well as the distribution structure of a bipolar plate. The cell is pressurized with process water directly from the pressure reservoir into the front opening of each individual channel with an outlet into the opposite pressure reservoir. The media within the pressure reservoirs are supplied and discharged via inlet openings in the front end plates of the stacks.

Another aspect of the invention is the arrangement of the outlets located at the outlet space opposite channels of the anode plane of two active area regions. In order to keep the outlet space as narrow as possible and at the same time avoid a detrimental effect by influencing the opposing outgoing free jets of the oxygen-water mixture, the channel web arrangements of both adjacent active area region can each be offset. Likewise, the structure offers the possibility of dividing the outlet reservoir by a central web so that the exiting media streams do not experience any mutual adverse influences.

At least one tie rod may extend through at least one receiving space.

Additionally, or alternatively, between at least two active area regions arranged adjacent in one plane an outlet space is formed for discharging residual water and the oxygen produced from the cell, wherein at least one tie rod extends through at least one outlet space.

The use of tie rods within a receiving space and/or an outlet space significantly improves the sealing effect along the media chambers by means of inner sealings. This leads to the advantage of a significantly better distribution of the surface pressure on the active surface elements. Uniform surface pressure on the active surface improves the performance of the stack.

The active area regions may have a length L and a width W, the ratio of length and width being: L/W=1/5 ... 1/1, respectively.

Advantageously, aspect ratios of 1:2 to 1:5 exist, however, a square active area region is also possible. Length and width are defined in the plane in which a respective active area region is formed.

Due to the lower mass flows on the cathode side, justified by the low density of hydrogen and the possibility of using longer channels, the active area region can adopt an advantageous rectangular shape. Thus, the water-bearing channels of the anodes can be kept as short as possible, and the plate width equivalent to the length of the channels of the cathode plate can be kept as large as possible.

Segmentation of the active area region allows optimization of the cross-section and length of the channels in the flow field of the anode-side bipolar plates, irrespective of the total active area region of the cell to be implemented. The design of the channel web contours can be based solely on the advantageous design in cell area normal direction, without taking into account the area enlargement to be implemented with regard to occurring pressure losses and concentration gradients over the total active area region.

The segmentation of the active area region into partial areas allows the further cell components such as membrane, catalyst coating and fine distribution structure to be manufactured in small geometric dimensions that are still 10avourable for the respective manufacturing method.

A further aspect of the present invention is a method for the production of hydrogen, wherein an electrolyzer according to the invention is provided, wherein water is supplied to the anodes of the electrolysis cells, an electric voltage is applied to the electrodes of the electrolysis cells, and hydrogen is withdrawn from the cathodes of the electrolysis cells.

Depending on the permeability of the proton exchange membrane, water may also be withdrawn from the cathodes, if necessary, in a mixture with the hydrogen produced.

Oxygen is also withdrawn from the anodes.

The active area regions are flowed by separate water volume flows. This means that water volume flows do not flow to the active area regions in such a way that a water volume flow flows over several active area regions in succession, but that a respective active area region is supplied by its own water volume flow. This does not exclude the possibility that a total water volume flow is made available to the entire electrolyzer and thus to several or even all electrolysis cells. However, in this case it is ensured that this total water volume flow is divided into individual water volume flows before reaching the active area regions, which flow separately to or over the individual active area regions.

Yet another aspect of the invention is the use of an electrolyzer according to the invention for the production of hydrogen.

The invention is explained below with reference to the embodiments shown in the figures.

The figures show
Figure 1: a conventional electrolysis cell in sectional view,
Figure 2: a conventional bipolar plate of the electrolysis cell in top view,
Figure 3: the anode side of a bipolar plate formed according to the invention in top view,
Figure 4: the cathode side of a bipolar plate according to the invention in top view,
Figure 5: a partially cut electrolyzer,
Figure 6: Detail A from Figure 5, and
Figure 7: the electrolyzer in a cross-sectional view.

Reference has already been made to Figures 1 and 2 for explanation of the prior art.

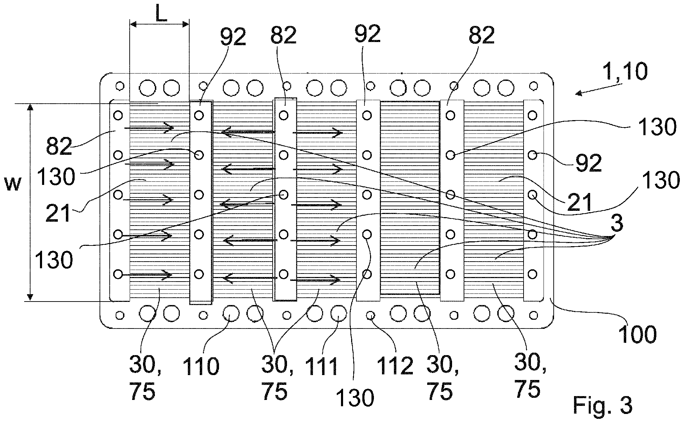

Fig. 3 shows a top view of a bipolar plate 20 of an electrolysis cell 1 with exemplary five individual active area regions 30. Each active area region has a respective length L and a width W. Channels 21 run parallel between receiving spaces 82, arranged between some active area regions 30. The water 200 flows through the channels 21 of the flow field 75 over the respective active area region 30 via a respective receiving space 82. The arrows indicate the direction of flow of the water 200. The residual water and the oxygen produced are discharged from the cell in an outlet space 92. An outer frame, realized as a supporting element 100, has free-cuts 110 for the cathode outlets and free-cuts 111 for the supply of a coolant plate. In addition, free-cuts 112 are provided for the bushing of tie rods.

The channels 21 of the active area regions 30 do not necessarily have to run parallel as shown here, but can follow any pattern.

An outer circumferential sealing 95 prevents the media from exiting the respective transport paths.

A flow field 75 can be formed in embodiment according to the prior art shown in Figure 2.

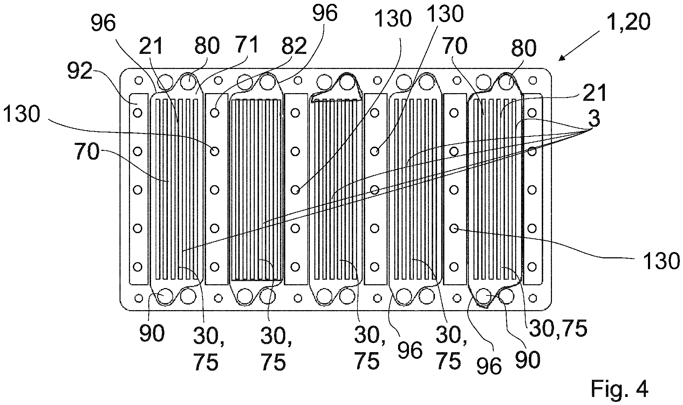

Fig. 4. Shows an exemplary cathode 11, via which the generated hydrogen is transported downstream. The channels 21 of the individual active area regions 30 run orthogonally to those of the anode, shown in Fig. 3. In addition to the flow fields 75 of the coarse distribution structure 70 and the inlet devices 80 and outlet devices 90, there is an additional distribution structure 71, which is formed in the region of the supporting element 100. In addition to the sealing to the outside, the cathode side of the respective active area region 30 must be sealed against the spaces 82, 92 by means of inner sealings 96.

The electrolyzer comprises a plurality of tie rods 130 provided between active area regions 30, wherein the tie rods extend perpendicular with regard to the shown planes. The tie rods 130 are fixed to a top plate and a bottom plate of the electrolyser to generate compressive forces in the stack and apply compressive force to at least one inner sealing 96 of the stack. In the shown embodiments, tie rods 130 are provided at the outer sides of the outer active area regions 30, too. Some of the tie rods 130 extends through a receiving space 82, and some of the tie rods extend through an outlet space 92 between at two active area regions 30 arranged adjacent in one plane.

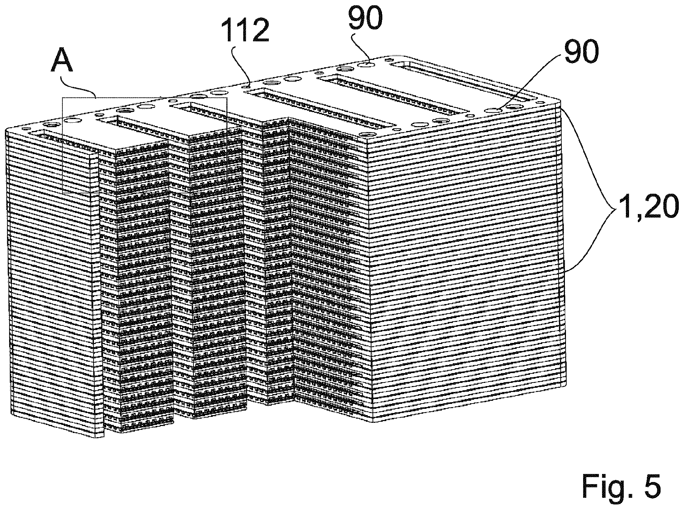

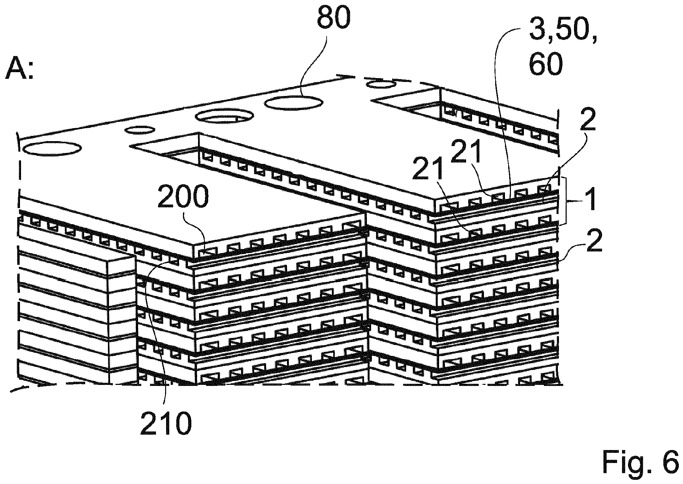

Fig. 5 shows a cell stack consisting of several electrolyses cells 1 without head plates with a double cut on the center planes. Detail A is shown in Fig. 6 in an enlarged detail section.

Fig. 5 shows the structure of the electrolyzer according to the invention. The electrolyzer comprises a stack of electrolyses cells 1, which comprise bipolar plates as shown in Figs. 3 and 4. The stack stands on a base plate, which is not shown here, and is covered by a top plate, which is also not shown, wherein the stack can basically be arranged in all directions in this configuration, so that the top plate can also point downwards or to the side.

Shown here are outlet devices 90 for the media discharge. The free-cuts 112 in the bipolar plates 20 allow tie rods to clamp the base plate and head plate together. The inlet devices and the outlet devices 90 can also be distributed in any arrangement on the base plate and head plate to take account of the flow properties of the respective media.

Fig. 6 shows section A of Fig. 5. Anode 10 and cathode 11 are aligned with their open flow fields 75 against each other and arranged in several parallel planes 2. Between the flow fields 75 is the composite of proton exchange membrane 3, catalyst layer 50, fine distribution layer 60 and inner sealings.

Stacking the individual electrolysis cells 1 results in pressure space for the respective media in the channels 21. The supply and discharge of the media from the pressure spaces takes place via connecting segments through the head plate. An inlet device 80 can supply two active area regions in the structure shown. The water 200 flows through the channels 21 in the active area regions of the anode 10 via the fine distribution layer 60 onto the proton exchange membrane 3. The residual water and the oxygen produced are discharged from the stack via the channels 21, which form an outlet space in the cathode 11, and an associated outer connection segment.

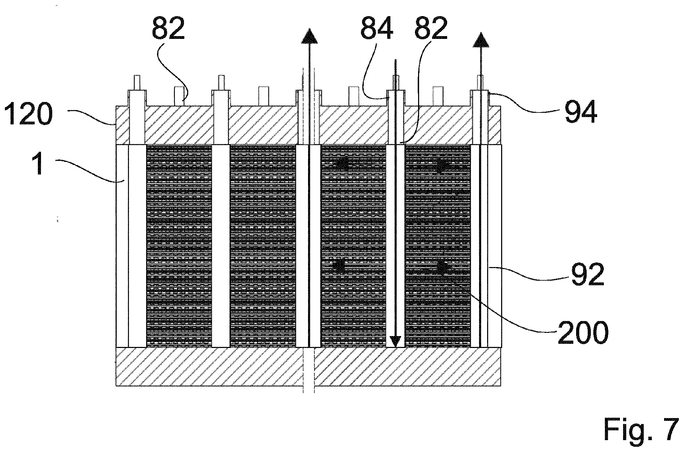

Fig. 7 shows the electrolyzer in a cross-sectional view. Here receiving spaces 82 are built up as pressure reservoirs by stacking the individual cells 1 with their openings according to the description above. The media are fed in and out of the receiving spaces 82 via common inlet flow connections 84 and common outlet flow connections 94 through the top plate 120.

The arrows show a possible flow path for the process water 200. A respective receiving space supplies two active area regions. The receiving spaces 82 are supplied with process water 200 via the common inlet flow connections 84 on the input side. The process water 200 flows through the channels in the individual active area regions of the anode via the fine distribution layer onto the proton exchange membrane. The residual water and the oxygen produced are led out of the stack via the outlet spaces 92 and the associated common outlet flow connections 94. The stack is based on a base plate 121.

### Reference listing

- 1: electrolysis cell
- 2: plane
- 3: proton exchange membrane
- 10: anode
- 11: cathode
- 20: bipolar plate
- 21: channel
- 30: active area region
- 40: plate
- 50: catalyst layer
- 60: fine distribution layer
- 70: coarse distribution structure
- 71: additional distribution structure
- 75: flow field
- 80: inlet device
- 82: receiving space
- 84: common inlet flow connections
- 90: outlet device
- 92: outlet space
- 94: common outlet flow connection
- 95: sealing
- 96: inner sealing
- 100: supporting element
- 110: free-cut for the cathode
- 111: free-cut for coolant plate
- 112: free-cut tie rod
- 120: top plate
- 121: base plate
- 130: tie rod
- 200: water
- 210: hydrogen
- L: length
- W: width

## Claims

1. . An electrolyzer for producing hydrogen (210), comprising a plurality of electrolysis cells (1) arranged in a plurality of planes (2), each having at least one anode (10) and one cathode (11) and a proton exchange membrane (3) between the anode (10) and the cathode (11), the proton exchange membranes (3) forming respective active area regions (30), wherein at least one electrolysis cell (1) has a plurality of active area regions (30) arranged substantially in a plane (2), wherein the electrolyzer comprises at least one tie rod (130) provided between active area regions (30) and extending perpendicular with regard to the planes (2).

2. . Electrolyzer according to claim 1, **characterized in that** at least one of cathode (11) and anode (10), comprises at least one coarse distribution structure (70) for guiding a respective medium in the respective electrode along at least one active area region (30).

3. . Electrolyzer according to claim 2, **characterized in that** at least one of anode (10) and cathode (11) comprises a plate (40) on its side facing away from the proton exchange membrane (3), wherein the coarse distribution structure (70) is at least partially formed by channels integrated into the plate (40) and/or by webs attached to the plate (40).

4. . Electrolyzer according to claim 3, **characterized in that** both the cathode (11) and the anode (10) of an electrolysis cell (1) form a coarse distribution structure (70), and in the respective active area regions (30) of the electrodes the coarse distribution structure (70) defines a respective flow direction for the medium, conducted by the respective electrode, wherein the flow directions of the areas of cathode (11) and anode (10) associated with a respective active area region (30) run at an angle of 60° to 120°.

5. . Electrolyzer according to claim 4, **characterized in that** per electrolysis cell (1) there is at least one inlet device for feeding an inlet medium into the electrolysis cell (1) and at least one outlet device (90) for discharging an outlet medium from the electrolysis cell (1), wherein the inlet and outlet devices (90) of a plurality of electrolysis cells (1) are fluidically-connected to form a common inlet flow connection and a common outlet flow connection.

6. . Electrolyzer according to at least one of the preceding claims, **characterized in that** at least one electrolysis cell (1) has at least three active area regions (30) arranged essentially in a plane (2).

7. . Electrolyzer according to at least one of the preceding claims, **characterized in that** the proton exchange membrane (3) has a fine distribution layer (60).

8. . Electrolyzer according to at least one of the preceding claims, **characterized in that** the active area regions (30) are arranged in a supporting element (100).

9. . Electrolyzer according to claim 8, **characterized in that** the active area regions (30) are embedded in the supporting element (100).

10. . Electrolyzer according to at least one of the preceding claims, **characterized in that** between at least two active area regions (30) arranged adjacent in one plane (2) a receiving space (82) is formed for receiving the medium in the electrode in a respective receiving space.

11. . Electrolyzer according to claim 10, **characterized in that** at least one tie rod (130) extends through at least one receiving space (82).

12. . Electrolyzer according to at least one of the preceding claims, **characterized in that** between at least two active area regions (30) arranged adjacent in one plane (2) an outlet space (92) is formed for discharging residual water and the oxygen produced from the cell, wherein at least one tie rod (130) extends through at least one outlet space (92).

13. . Electrolyzer according to at least one of the preceding claims, **characterized in that** the active area regions (30) have a length L and a width W, the ratio of length and width being: L/W=1/5 ... 1/1, respectively.

14. . Method for the production of hydrogen (210), wherein an electrolyzer according to any one of claims 1 to 11 is provided, wherein water (200) is supplied to the anodes (10) of the electrolysis cells (1), an electric voltage is applied to the electrodes of the electrolysis cells (1), and hydrogen (210) is withdrawn from the cathodes (11) of the electrolysis cells (1).

15. . Method for the production of hydrogen (210) according to claim 12, **characterized in that** the active area regions (30) are flowed by separate water volume flows.
